Europäisches Patentamt

European Patent Office

Office européen des brevets

(11) Veröffentlichungsnummer: **0 196 343**
·A1

## (12) EUROPÄISCHE PATENTANMELDUNG

(21) Anmeldenummer: 85103895.0

(22) Anmeldetag: 01.04.85

(51) Int. Cl.⁴: **F 25 B 27/02**
F 25 B 17/00, F 25 B 35/00

(43) Veröffentlichungstag der Anmeldung:
08.10.86 Patentblatt 86/41

(84) Benannte Vertragsstaaten:
DE FR GB IT

(71) Anmelder: Basta, Walter
Zanaschkagasse 12/29/3
A-1120 Wien(AT)

(72) Erfinder: Basta, Walter
Zanaschkagasse 12/29/3
A-1120 Wien(AT)

(74) Vertreter: Puchberger, Peter, Dipl.-Ing. et al,
Patentanwälte Dipl.-Ing. Georg Puchberger Dipl.-Ing.
Rolf Puchberger Dipl.-Ing. Peter Puchberger
Singerstrasse 13
A-1010 Wien(AT)

(54) Kühlaggregat, insbesondere für Fahrzeuge wie Autos, Lastwagen u.dgl.

(57) Die Erfindung betrifft ein Kühlaggregat, das insbesondere für Fahrzeuge wie Autos, Lastwagen und Kühllastwagen bestimmt ist. Das Kühlaggregat umfaßt eine Kältemaschine nach dem Absorptionsprinzip, deren Austreiber und/oder Absorber (5) mit insbesondere vom Antriebsmotor des Fahrzeuges zur Verfügung gestellter Überschußwärme (6) beheizbar ist. Im Austreiber (5) sind in bevorzugter Weise Füllkörper (7) zur Aufnahme der Kühlflüssigkeit bzw. des Kühlmittels vorgesehen, wobei die Füllkörper (7) vorteilhaft aus porösem Material gebildet sind.

Fig.2

EP 0 196 343 A1

Die Erfindung betrifft ein Kühlaggregat, insbesondere für Fahrzeuge wie Autos, Lastwagen u.dgl. Derartige Kühlaggregate sind seit langem bekannt und stellen Kälte für den Betrieb von Klimaanlagen oder für die Abkühlung eines Kühlladeraumes zur Verfügung. Die bisher eingesetzten Kühlaggregate arbeiten nach dem Prinzip von Kompressionskältemaschinen, wobei die für den Kompressor erforderliche Arbeit vom Antriebsmotor des Fahrzeuges oder von einem eigenen Motor aufgebracht werden muß. Ein in Betrieb befindliches Klimagerät verringert im Durchschnitt die für den Fahrbetrieb zur Verfügung stehende Motorleistung um ca. 5 bis 6 kW bzw. es wird der Kraftstoffverbrauch entsprechend erhöht. Dies trifft auch dann zu, wenn die Kompressionskältemaschine nicht vom Motor direkt, sondern indirekt elektrisch angetrieben wird.

Andererseits ist es bekannt, daß mehr als 50 % der Energie von Verbrennungsmotoren als Wärmeenergie ungenutzt freigesetzt wird. Die bessere Ausnutzung des immer teurer werdenden Treibstoffs wird daher angestrebt.

Das erfindungsgemäße Kühlaggregat ist dadurch gekennzeichnet, daß es eine Kältemaschine nach dem Absorptionsprinzip umfaßt, deren Austreiber mit insbesondere vom Antriebsmotor des Fahrzeuges zur Verfügung gestellter Überschußwärme beheizbar ist. In einer bevorzugten Ausführungsform sind im Austreiber Füllkörper zur Aufnahme der Kühlflüssigkeit bzw. des Kühlmittelgemisches vorgesehen. Die Füllkörper können gemäß Erfindung aus porösem Material wie poröse Tonkugeln sein oder aus netz- oder gitterartigen Körpern bestehen. Nach einem weiteren Kennzeichen der Erfindung kann die Überschußwärme vom Auspuffsystem des Fahrzeugmotors mittels Wärmetauscher abgenommen sein. In Weiterbildung der Erfindung kann der Kondensator der Kältemaschine luftgekühlt sein. In einer weiteren Ausführungsform ist die Kältemaschine eine periodisch arbeitende Absorptionsmaschine. In einer weiteren Ausführungsform weist das Kühlaggregat zwei im Gegentakt periodisch arbeitende Absorptionskältemaschinen auf.

Die Verwendung der Verlustwärme des Antriebsmotors als Energiequelle für die Kältemaschine bedeutet eine beträchtliche Energieersparnis und vermeidet den bei Kompressionskältemaschinen auftretenden Abfall der Motorleistung und verhindert den erhöhten Treibstoffverbrauch. Das erfindungsgemäße Kühlaggregat erfüllt die Anforderungen, die an Kühlaggregate für Fahrzeuge gestellt werden, nämlich kompakte und leichte Bauweise, betriebssicher, geräuschlos und stoßsicher sowie in hohem Maße wartungsfrei. Derartige Kühlaggregate sollen außerdem leicht bedienbar, regelbar und dem Fahrbetrieb des Fahrzeuges angepaßt sein. Der Kühlbedarf für die Klimatisierung eines größeren PKW wird etwa mit 2000 kcal/h und mehr angenommen.

Als Kältemaschinen können je nach den gegebenen Voraussetzungen alle Arten von Absorptionsmaschinen eingesetzt werden. In vorteilhafter Weise finden bei der Erfindung periodische Absorptionsmaschinen Verwendung, die wenig erschütterungsempfindlich und hinsichtlich ihrer Kühlleistung bei Luftkühlung akzeptabel sind.

Im nachfolgenden wird die Erfindung anhand der Zeichnungen beispielsweise näher beschrieben. Fig. 1 zeigt die erfindungsgemäße Anordnung in einem einfachen Schema und Fig. 2 ist die schematische Darstellung einer periodisch arbeitenden Absorptionskühlmaschine gemäß Erfindung. Fig. 3 zeigt die schematische Darstellung eines bevorzugten Ausführungsbeispieles des erfindungsgemäßen Kühlaggregates.

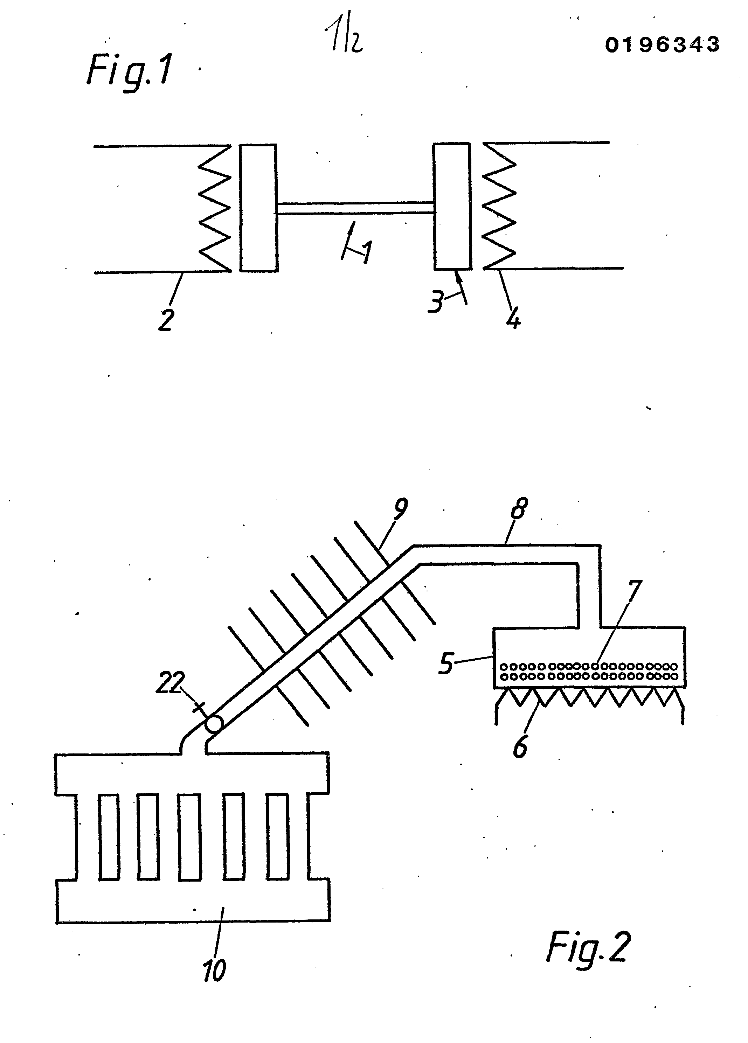

In Fig. 1 ist die Kältemaschine des Kühlaggregats mit 1 bezeichnet. Auf der einen Seite wird die Kältemaschine mittels Wärmetauscher 2 durch Überschußwärme beheizt. Die durch die Kältemaschine erzeugte Kälte wird auf der anderen Seite 3 über Kühlflächen an ein zu kühlendes Medium abgegeben. Das zu kühlende Medium ist hier als Wärmetauscher 4 dargestellt.

Fig. 2 zeigt die in bevorzugter Weise angewandte periodisch arbeitende Absorptionsmaschine. Der Absorber 5 ist periodisch durch den Wärmetauscher 6 beheizbar. Die Heizenergie wird der Motorwärme des Fahrzeugs entnommen. Im Absorber 5 befinden sich poröse Füllkörper wie z.B. Tonkugeln 7, die die unverdampfte Kühlflüssigkeit aufnehmen, wodurch eine unkontrollierte Bewegung der Kühlflüssigkeit durch die Bewegung des Fahrzeugs verhindert ist.

Beim Heizvorgang wird der Austreiber auf ca. 120$^o$C erhitzt. Das Kühlmittel verdampft und gelangt über das Rohr 8 in den Kondensator 9, der luftgekühlt ist. Der Dampf wird im absteigenden Ast des Rohres 8 durch den Kondensator 9 abgekühlt. Beim Wiederverdampfen im Kühler 10 wird der Umgebung Wärme entnommen und somit Kälte erzeugt. Diese Kälte wird zur Klimatisierung des Fahrzeugs bzw. des Kühlraumes verwendet. Nach Abschalten der Heizung über den Wärmetauscher 6 gelangt das Kühlmittel über das Rohr 8 wieder in den Absorber 5 zurück und steht dort für den nächsten Arbeitsvorgang zur Verfügung.

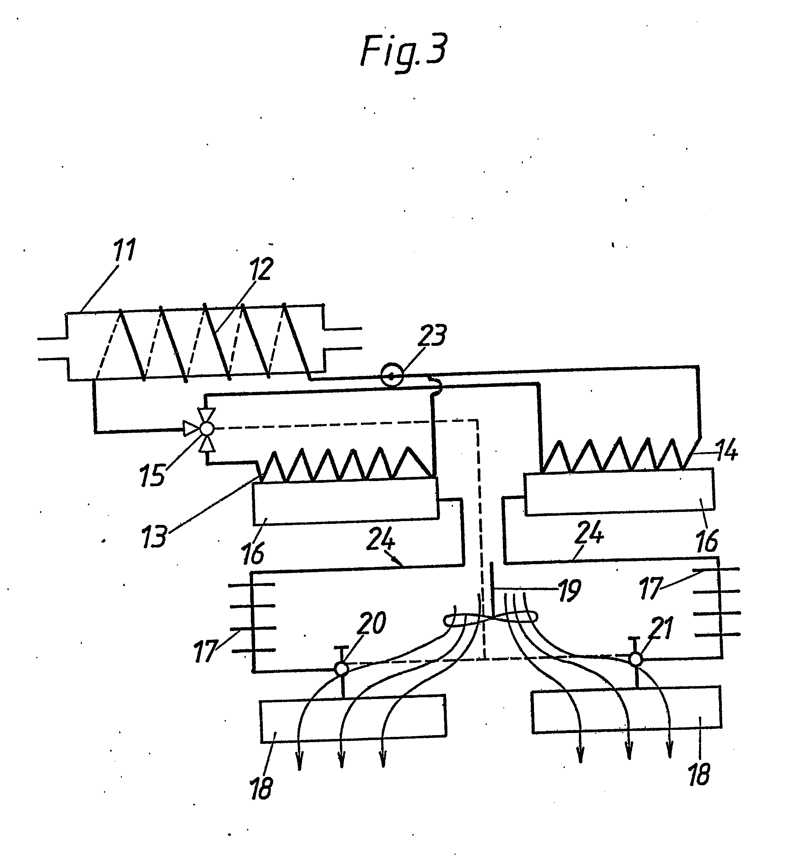

In Fig. 3 ist schematisch ein Kühlaggregat dargestellt, welches zwei im Gegentakt arbeitende, periodisch wirkende Absorptionsmaschinen aufweist. Vom Auspuffsystem 11 des Fahrzeugs wird über den Wärmetauscher 12 die Überschußwärme abgenommen und den zwei Heizeinrichtungen 13, 14 wahlweise zugeleitet. Das wahlweise Zuleiten wird von einem Steuerventil 15 gesteuert. Jeder der Heizvorrichtungen 13, 14 ist eine Kältemaschine gemäß Fig. 2 zugeordnet, die aus den Austreibern 16, dem Luftkühler 17 und den Kühlern 18 bestehen. Vom Gebläse 19 wird die zu kühlende Luft über die Kühler 18 geleitet, wobei die gekühlte Luft zur Klimatisierung dient.

Durch das Ventil 15 werden die beiden Austreiber 16 alternierend beheizt und die zugehörigen Kältemaschinen dadurch eingeschaltet. Solange die eine Kältemaschine in Kühlphase ist, wird die andere Kältemaschine angeheizt. Die beiden Leitungen 24 können durch die Ventile 20, 21 alternierend abgesperrt werden, wodurch beim Abstellen des Motors das angeheizte Aggregat mit dem Ventil versperrt werden kann und beim Start sofort wieder für eine Kühlung zur Verfügung steht.

Die Energiebilanz sieht beim Ausführungsbeispiel gemäß Fig. 3 folgendermaßen aus: Bei einem Temperaturunterschied von 20$^o$ (z.B. Abkühlung des $H_2O$ von 110$^o$C auf 90$^o$C) sind 100 1 $H_2O$/h bzw. 0,028 1 $H_2O$/sek nötig. Rechnet man mit einem Wirkungsgrad von 15 %, so entspricht dies einem notwendigen Durchsatz von 0,18 1 $H_2O$/sek. Ein 50 kW-Motor (68 PS) entwickelt mehr als 100 000 kcal/h. Wenn eine Periode der Kältemaschine 12 Minuten dauert und 2 kg Absorber verwendet werden, so ist pro Kältemaschine mit einer Leistung von 500 kcal zu rechnen.

Die Ventile 15, 20 und 21 sind durch entsprechende Steuerungen in der richtigen Reihenfolge zu schalten. In bevorzugter Weise handelt es sich dabei um magnetische Steuerventile.

Die Steuerung des Gegentaktes kann dabei durch einen Zeitschalter in einem gewissen Zeittakt oder durch Temperaturfühler erfolgen. Werden die Temperaturfühler (in den Zeichnungen nicht dargestellt) in vorteilhafter Weise an den Kühlern 18 angeordnet, so wird das Ventil 15 bei Überschreiten einer gewissen Temperatur des einen Kühlers 18 umgeschaltet, sodaß die andere Kältemaschine in Betrieb gesetzt wird.

Durch Schalten der Absperrventile 20, 21 kann das Kühlmittel gehindert werden, in den Austreiber zurückzukehren und bei Öffnung dieser Absperrventile steht sofort Kühlleistung zur Verfügung. Dadurch ist es möglich, z.B. in einem abgestellten PKW eine Vorkühlung zu erzielen. In Fig. 2 ist ein derartiges Absperrventil mit dem Bezugszeichen 22 eingezeichnet. Die Absperrventile 20, 21 können ebenso wie das Magnetventil 15 von einer nicht dargestellten, zentralen Steuereinheit gesteuert werden.

Im Rahmen der vorliegenden Erfindung ist es auch möglich, trockene Absorptionskältemaschinen zu verwenden, wobei also das Kühlmittel von trockenen Absorptionsstoffen aufgenommen bzw. abgegeben wird. Ein bekanntes Mittel dafür ist $CaCl_2$. Die Anordnung der porösen Füllstoffe kann dann entfallen.

Die Anordnung des Wärmetauschers 12 kann im Auspuffsystem an jeder beliebigen Stelle erfolgen, wobei auf die Einfachheit beim Einbau geachtet werden kann.

Die in Fig. 3 mit dem Bezugszeichen 23 bezeichnete Pumpe dient dazu, den Heizkreislauf für die Austreiber 16 zu unterstützen.

Die Anordnung von Füllkörpern aus porösem Material im Austreiber kann auch bei kontinuierlich naß arbeitenden Absorptionskältemaschinen vorteilhaft sein. Unter Umständen können solche Füllkörper auch in dem zumeist getrennt angeordneten Absorber angeordnet werden. Bekanntlich wird bei solchen Absorptionskältemaschinen die Absorptionslösung zwischen Austreiber und Absorber hin- und hergepumpt. Durch die Anordnung der porösen Füllkörper werden unkontrollierte und den Wirkungsgrad verschlechternde Bewegungen der Absorptionslösung verhindert.

Patentansprüche
=================================

1. Kühlaggregat, insbesondere für Fahrzeuge wie Autos, Lastwagen u.dgl., dadurch gekennzeichnet, daß das Kühlaggregat eine Kältemaschine nach dem Absorptionsprinzip umfaßt, deren Austreiber (5) mit insbesondere vom Antriebsmotor des Fahrzeuges zur Verfügung gestellter Überschußwärme beheizbar ist.

2. Kühlaggregat nach Anspruch 1, dadurch gekennzeichnet, daß im Austreiber Füllkörper (7) zur Aufnahme der Kühlflüssigkeit bzw. des Kühlmittelgemisches vorgesehen sind.

3. Kühlaggregat nach Anspruch 2, dadurch gekennzeichnet, daß die Füllkörper aus porösem Material gebildet sind.

4. Kühlaggregat nach Anspruch 3, dadurch gekennzeichnet, daß die Füllkörper poröse Tonkugeln sind.

5. Kühlaggregat nach Anspruch 2, dadurch gekennzeichnet, daß die Füllkörper netz- oder gitterartige Körper sind.

6. Kühlaggregat nach einem der vorhergehenden Ansprüche 1 bis 5, dadurch gekennzeichnet, daß die Überschußwärme vom Auspuffsystem des Fahrzeugmotors mittels Wärmetauscher abgenommen ist.

7. Kühlaggregat nach einem der Ansprüche 1 bis 6, dadurch gekennzeichnet, daß der Kondensator der Kältemaschine luftgekühlt ist.

8. Kühlaggregat nach einem der Ansprüche 1 bis 7, dadurch gekennzeichnet, daß die Kältemaschine eine periodisch arbeitende Absorptionsmaschine ist.

9. Kühlaggregat nach einem der Ansprüche 1 bis 7, dadurch gekennzeichnet, daß das Kühlaggregat zwei im Gegentakt periodisch arbeitende Absorptionskältemaschinen aufweist.

10. Kühlaggregat nach Anspruch 9, dadurch gekennzeichnet, daß der Gegentakt durch Magnetventile (15, 20, 21) in einem Zeittakt oder durch Temperaturfühler gesteuert ist.

11. Kühlaggregat nach Anspruch 10, dadurch gekennzeichnet, daß die Temperaturfühler an den Kühlern (18) angeordnet sind.

12. Kühlaggregat nach einem der vorhergehenden Ansprüche, dadurch gekennzeichnet, daß im Rohr (8) vor dem Kühler (10, 18) ein Absperrventil (22, 20, 21) angeordnet ist, um die Rückführung des Kühlmittels zu verhindern, sodaß bei Öffnung dieser Ventile Kühlleistung sofort zur Verfügung gestellt ist.

**Fig.1**

**Fig.2**

Fig.3

2/2

0196343

Europäisches
Patentamt

**EUROPÄISCHER RECHERCHENBERICHT**

**0196343**
Nummer der Anmeldung

EP 85 10 3895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 455 401 (BRAUSE) * Spalte 1, Zeile 47 - Spalte 5, Zeile 58; Figuren 1-8 * | 1,7,12 | F 25 B 27/02 F 25 B 17/00 F 25 B 35/00 |
| Y | | 2-6,8-11 | |
| Y | FR-A- 705 062 (PLATEN-MUNTERS REFRIGERATING SYSTEM AKTIEBOLAG) * Seite 2, Zeile 68 - Seite 4, Zeile 10; Figuren 1,2 * | 2-5 | |
| Y | DE-A-1 530 559 (DAIMLER-BENZ) * Seite 2, letzter Absatz; Figuren 1,2 * | 6 | |
| A | | 1 | **RECHERCHIERTE SACHGEBIETE (Int. Cl.4)** |
| Y | US-A-2 068 333 (KRUMMELL) * Seite 1, rechte Spalte, Zeilen 21 - Seite 3, rechte Spalte, Zeile 37; Figuren 1-4 * | 8 | F 25 B B 60 H |
| A | | 1 | |
| Y | US-A-2 438 105 (ERLAND AF KLEEN) * Spalte 3, Zeile 30 - Spalte 6, Zeile 18; Figuren 1-6 * | 9-11 | |

--- -/-

Der vorliegende Recherchenbericht wurde für alle Patentansprüche erstellt.

| Recherchenort DEN HAAG | Abschlußdatum der Recherche 20-08-1985 | Prüfer BOETS A.F.J. |
|---|---|---|

Europäisches
Patentamt

**EUROPÄISCHER RECHERCHENBERICHT**

Nummer der Anmeldung

EP 85 10 3895

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 287 172 (HARRISON) <br> * Seite 2, rechte Spalte, Zeile 19 - Seite 6, rechte Spalte, Zeile 33; Figuren 1-24 * | 1 | |
| A | | 2,3,12 | |
| | --- | | |
| X | DE-C- 424 225 (PORTUNE) <br> * Insgesamt * | 1,8 | |
| | --- | | |
| X | FR-A-2 260 464 (BURGER) <br> * Seite 6, Zeile 9 - Seite 13, Zeile 20; Figuren 1-5 * | 1,7,12 | |
| A | | 8-10 | |
| | --- | | RECHERCHIERTE SACHGEBIETE (Int. Cl.4) |
| X | US-A-2 944 407 (PETTIS) <br> * Spalte 2, Zeile 3 - Spalte 3, Zeile 75; Figuren 1-4 * | 1,12 | |
| | --- | | |
| X | US-A-3 828 566 (WETZEL) <br> * Spalte 2, Zeile 42 - Spalte 7, Zeile 25; Figuren 1-5 * | 1,12 | |
| A | | 2-5,7 | |
| | --- | | |
| A | US-A-1 865 349 (WRIGHT) <br> * Seite 2, Zeilen 62-111; Figure 5 * | 2,3,5 | |
| | ---       -/- | | |

Der vorliegende Recherchenbericht wurde für alle Patentansprüche erstellt.

| Recherchenort <br> DEN HAAG | Abschlußdatum der Recherche <br> 20-08-1985 | Prüfer <br> BOETS A.F.J. |
|---|---|---|

Europäisches
Patentamt

**EUROPÄISCHER RECHERCHENBERICHT**

**0196343**

Nummer der Anmeldung

EP 85 10 3895

Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 528 004 (ERLAND EF KLEEN) <br> * Spalte 2, Zeile 15 - Spalte 12, Zeile 34; Figuren 1-7 * | 9-11 | |
| | --- | | |
| A | FR-A- 972 134 (BATARD) <br> * Seite 1, rechte Spalte, Absatz 1 - Seite 2, linke Spalte, Absatz 3; Figuren 1-7 * | 9,10 | |
| | --- | | |
| A | US-A-2 087 939 (SÄRNMARK) | | |
| | --- | | |
| A | US-A-1 908 413 (ELFVING) | | |
| | --- | | |
| A | US-A-1 808 056 (MITCHELL) | | RECHERCHIERTE SACHGEBIETE (Int. Cl.4) |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 20-08-1985 | BOETS A.F.J. |